# EUROPÄISCHE PATENTSCHRIFT

(11) **EP 2 083 964 B1**
(45) Veröffentlichungstag und Bekanntmachung des Hinweises auf die Patenterteilung: **28.09.2011**
(21) Anmeldenummer: 07819042.8
(22) Anmeldetag: 16.10.2007
(51) Int. Cl.: B23K 37/02, B23K 9/025, B23K 28/02, B23Q 39/02, B23K 101/16, B23K 101/18

(54) **VORRICHTUNG ZUM SCHWEIßEN VON BANDMATERIAL**
DEVICE FOR WELDING A STRIP OF MATERIAL
DISPOSITIF POUR SOUDER UN MATÉRIAU EN BANDE

(30) Priorität: 16.10.2006 DE 102006049405
(43) Veröffentlichungstag der Anmeldung: 05.08.2009
(73) Patentinhaber: Leicht Stanzautomation GmbH, 75015 Bretten (DE)
(72) Erfinder: HERZFELD, Wolfgang, 75228 Ispringen (DE)
(74) Vertreter: Reinhardt, Harry
(86) Internationale Anmeldenummer: PCT/EP2007/008974
(87) Internationale Veröffentlichungsnummer: WO 2008/046589

(56) Entgegenhaltungen:
- EP-A- 0 613 747
- DE-A1- 3 044 350
- DE-U1- 9 214 518
- DE-U1- 29 508 656

## Beschreibung

### Gebiet der Erfindung

Die Erfindung betrifft eine Vorrichtung zum Schweißen von Bandmaterial, umfassend eine Schweißvorrichtung mit mindestens einer Schweißelektrode und ein Führungsmittel zum Führen der einen Schweißelektrode nach dem Oberbegriff des Anspruchs 1.

### Stand der Technik

Vorrichtungen zum Verschweißen von Bandmaterial sind allgemein bekannt. Solche Vorrichtungen werden bevorzugt verwendet, um Bandmaterial, das auf Rollen aufgerollt ist, endlos aneinander zu fügen, und sind üblicherweise dafür vorgesehen, mehrere Arbeitsschritte an dem Bandmaterial vorzunehmen. So wird zum Beispiel das Bandmaterial mit mehreren Positionierungsmitteln in einem ersten Arbeitsschritt in einer entsprechenden Position gehalten, in einem zweiten Schritt werden die Enden des Bandmaterials mit einem Schneidwerkzeug abgetrennt, um gleichartige bzw. gegengleiche Kanten für eine zuverlässige Verbindung zu erhalten. Weiter werden die Kanten mit einem Schweißwerkzeug verschweißt und die Schweißnaht wird evtl. noch nachbearbeitet.

Die jeweiligen Arbeitsschritte benötigen verschiedene Werkzeuge. So werden für das Abtrennen der Bandmaterialenden eine Schneidevorrichtung und für das Verschweißen der Bandmittel eine oder mehrere Schweißelektroden etc. verwendet. Dazu ist es notwendig, diese verschiedenen Werkzeuge in einer geregelten Reihenfolge an das Bandmaterial heranzuführen, um die verschiedenen Arbeitsschritte nacheinander am Arbeitsort vornehmen zu können.

DE-U 295 08 656 offenbart eine Bandschweißvorrichtung mit einer Schneidevorrichtung. Die Schneidevorrichtung wird nach dem Schneidevorgang in der Grundplatte der Bandschweißvorrichtung versenkt und dient so mit ihrer Oberseite als Anlagefläche für die geschnittenen Bandenden. Weiter kann die Oberseite der Schneidevorrichtung auch als weitere Schweißelektrode ausgebildet sein. Nach dem Abtrennen der Bandenden wird durch das Absenken der Schneidevorrichtung der Bearbeitungsbereich freigegeben und die Schweißelektrode, die an einem Schwenkarm befestigt ist, schwenkt über die nun aneinander gelegten Bandenden. Nach dem Verschweißen der Bandenden wird die Schweißelektrode mittels des Schwenkarms wieder in eine Ruheposition verfahren und somit die Bearbeitungsfläche zum Beispiel für eine weitere Bearbeitung der Schweißnaht freigegeben. Ein Versenken des jeweiligen Werkzeugs ist jedoch nur mit wenigen Werkzeugen und nur in begrenztem Maße möglich.

Aus der EP 613 747 A2 ist eine vorzugsweise zum Schweißen von Automobilteilen verwendete Schweißvorrichtung mit einem Revolverwerkzeug bekannt, an dem wechselweise unterschiedliche Werkzeuge befestigbar und für einen Schweißvorgang und eine Bearbeitung des Materials einsetzbar sind. Die Schweißelektrode wird relativ zu den zu schweißenden Teilen bewegt, allerdings nicht entlang ihrer Halterung am Revolverwerkzeug.

DE 30 44 350 A1 zeigt eine Vorrichtung zum Besäumen und Zusammenschweißen von zwei Bandenden, wobei ein Schermesser und eine Schweißunterlage an einer vertikal schwenkbaren Konstruktion angebracht sind.

DE 25 48 375 B1 zeigt eine Schweiß- und Schneidvorrichtung zum Verbinden von Bandenden in einer Bandverarbeitungsanlage, bei der die Bandendenbeschneidungsvorrichtungen mit den Schneidwerkzeugen und Bandzentriervorrichtungen sowie die Schweißmaschine mit den Bandhaltevorrichtungen als bewegliche Einheit ausgebildet sind und die bewegliche Einheit aus Bandehdenbeschneidvorrichtung und der Schweißmaschine in der Ruhestellung außerhalb der Bandbahn angeordnet und in diese nur in Querrichtung zur Bandbahn ein- und ausfahrbar ausgebildet ist.

Das Dokument DT 1 627 555 zeigt eine Vorrichtung zum Besäumen und Zusammenschweißen von zwei Bandenden mit einem von zwei seitlichen, zusammen auf- und abbewegbaren Vertikalbalken getragenen oberen Querbalken, der zwei mit horizontalem Abstand voneinander angeordnete, nach unten gerichtete Schermesser zum gleichzeitigen Besäumen der beiden Bandenden trägt, sowie mit einer mittels der Vertikalbalken zusammen mit dem oberen Querbalken heb- und senkbaren Schweißunterlage, wobei der obere Querbalken, die ihn tragenden Vertikalbalken und ein diese verbindender, unterer Querbalken einen in sich geschlossenen, rahmenförmigen Halter bilden und die Schweißunterlage an der Oberseite des unteren Querbalkens angeordnet ist.

Das deutsche Gebrauchsmuster G 82 05 867 U1 zeigt eine Schweißmaschine zum Verbinden aufeinanderfolgender Bandenden bei einem kontinuierlichen Banddurchlauf bestehend aus einer einlaufseitigen und einer auslaufseitigen Spannvorrichtung mit der Möglichkeit der Seitenzentrierung der Bandenden, einer Schere zum Beschneiden der Bandenden, welche zusammen mit der Schweißvorrichtung an einem verschiebbaren Schlitten angeordnet ist, wobei die Schere als zweischnittige Schere mit parallel verlaufenden Schnittkanten ausgeführt ist und die bandeinlaufseitige Spannvorrichtung mindestens um den Abstand der beiden Schnittkanten der Schere in Bandlaufrichtung verschiebbar ist

Auch ist bekannt, Werkzeuge manuell an die Bearbeitungsstelle zu führen. So werden sogenannte Verpressbrücken nach dem Verschweißen an die Schweißnaht geführt, um die Schweißnaht zu glätten. Diese Verpressbrücken werden manuell über das Bandmaterial geschoben und rasten dann in Aussparungen der Grundplatte ein. Das manuelle Einsetzen und Entfernen der Verpressbrücke ist jedoch zeitaufwändig und verteuert das Verschweißen der Bandenden.

### Aufgabe der Erfindung

Ausgehend von diesem Stand der Technik liegt der vorliegenden Erfindung die Aufgabe zugrunde, eine Vorrichtung zur Verfügung zu stellen, die eine einfachere und/oder flexiblere und/oder preisgünstigere Heranführung verschiedener Werkzeuge ermöglicht.

Diese Aufgabe wird durch eine Vorrichtung mit den Merkmalen des Anspruches 1 gelöst.

Die Erfindung erkennt dabei, dass es möglich ist, in dem Führungsmittel, das die Schweißelektrode führt, weitere Mittel zur Bearbeitung des Bandmaterials wie Werkzeuge anzuordnen, die so gleichzeitig oder zeitversetzt zur Schweißelektrode an die Bearbeitungsstelle geführt werden können. Dabei kann das weitere Werkzeug sowohl oberhalb als auch neben der Schweißelektrode bzw. in anderen Positionen benachbart zu der Schweißelektrode angeordnet werden. So wird es möglich, auf die manuelle Zuführung verschiedener Werkzeuge an das Bandmaterial zu verzichten und höhere Taktraten bei der Verbindung von Bandmaterial zu erzielen.

Werkzeuge zum Bearbeiten der Bänder im Sinne der Erfindung umfassen auch Sensoren und/oder andere Mess-, Steuer- und Kontrollinstrumente zum Messen, Steuern und Kontrollieren von Parametern zur Bandverarbeitung.

Obwohl das Führungsmittel grundsätzlich als Führungsschiene auf der Grundplatte der Vorrichtung, als Magnetführung und/oder Seilführung ausgebildet sein kann, ist das Führungsmittel ein Führungsarm. Dabei umfasst ein Führungsarm ein oder mehrere steife Elemente, die gelenkig miteinander verbunden sein können und an einer Stelle beweglich mit der Grundplatte in Verbindung stehen. Der Führungsarm bewegt sich oberhalb der Grundplatte, d.h. auf der Seite, auf der das oder die Bänder geführt werden, und kann somit das Bandmaterial von mehreren Seiten, bevorzugt jedoch von oben anfahren.

Der Führungsarm ist mehrschenklig, insbesondere zweischenklig ausgebildet, wodurch die verschiedenen Werkzeuge zu verschiedenen Zeitpunkten sich im Arbeitsbereich, das heißt oberhalb oder seitlich vom Bandmaterial befinden. Bevorzugt ist der mehrschenklige Führungsarm mit einer Schwenkachse an oder im Schnittpunkt der mehreren Achsen ausgestattet. So kann eine größere Anzahl verschiedener Werkzeuge durch eine Schwenkbewegung in den Arbeitsbereich gebracht werden. Diese Schwenkbewegung ist einfach durch Aktoren durchzuführen und ist auch üblicherweise unkomplizierter durch eine Rechnereinheit als Steuereinheit zu berechnen als eine Bewegung, die die Steuerung mehrerer gelenkig miteinander verbundener Elemente umfasst.

Die Schweißelektrode und das mindestens eine weitere Werkzeug werden an verschiedenen Schenkeln des Führungsarms geführt. So wird vermieden, dass die beiden Werkzeuge sich gleichzeitig in dem Arbeitsbereich befinden, und somit die Kollisionsgefahr zwischen den mindestens zwei Werkzeugen gebannt. Durch die Anordnung an verschiedenen Schenkeln, die durch eine Bewegungsachse getrennt sind, wird das eine Werkzeug aus dem Arbeitsbereich mit der selben Bewegung geführt, die auch dafür sorgt, dass das mindestens eine zweite Werkzeug in den Arbeitsbereich eintritt.

Bevorzugt stehen die Schenkel des Führungsarms im rechten Winkel aufeinander. Es ist für den Fachmann offensichtlich, dass grundsätzlich Ausführungsformen mit beliebigen Winkeln von 0° bis 180° zwischen zwei Schenkeln denkbar sind, jedoch bietet eine Ausführungsform mit einem rechten Winkel zwischen den Schenkeln den Vorteil, dass, wenn das erste Werkzeug sich im Arbeitsbereich befindet, das jeweils andere Werkzeug nicht in den hinteren Bereich der Vorrichtung zeigt. Somit ist bei einem rechten Winkel zwischen den Schenkeln das andere Werkzeug in der Ruheposition einerseits vom Arbeitsbereich deutlich beabstandet, auf der anderen Seite ist keine besondere, evtl. störende Tiefe der Vorrichtung nötig, und auch weite Verfahrwege des Werkzeuges werden vermieden, die zu einer langsamen Verarbeitung des zu bearbeitenden Bandmaterials führen.

In einer weiteren Ausführungsform handelt es sich bei dem weiteren Werkzeug um mindestens ein Element eines Verpressmittels. Verpressmittel werden verwendet, um die von der Schweißelektrode aufgetragene Schweißnaht nach dem Schweißen zusammenzupressen und so die Höhe der Schweißnaht zu verringern. Das Verpressmittel umfasst im Allgemeinen zwei unterschiedliche Elemente. So wird ein Verpressbügel als das eine Element des Verpressmittels über die zu verpressende Schweißnaht geführt, während von der anderen Seite des Bandmaterials ein weiteres Element gegen das Bandmaterial geführt wird, welches nun Druck gegen das Bandmaterial und die an dem Bandmaterial anliegende Verpressbrücke ausübt. Durch diesen Druck wird die Schweißnaht verpresst. Durch das Führen der Verpressbrücke als Element des Verpressmittels mittels des Führungsmittels wird ein manuelles Zuführen ganz oder teilweise ersetzt, wodurch höhere Taktraten und eine gleichbleibendere Qualität der Schweißnähte erreicht werden kann.

In einer bevorzugten Ausführungsform ist das weitere Werkzeug ein Niederhalter. Ein solcher Niederhalter wird verwendet, um das Bandmaterial nahe dem Trennwerkzeug zu fixieren und so eine Scherbewegung des Bandes gegenüber dem Trennwerkzeug beim Abtrennen der Bandenden zu vermeiden. So kann auch bei einem dünnen Bandmaterial ein zuverlässiger Schnitt erreicht werden.

Bevorzugt sind zwei Niederhalter an demselben Schenkel angeordnet, so dass die beiden Niederhalter zur gleichen Zeit in den Arbeitsbereich eingebracht werden und neben der Trennvorrichtung platziert werden können. So können gleichzeitig beide Bandenden, auch wenn es sich um besonders dünnes Material handelt, sauber geschnitten werden.

In einer besonders bevorzugten Ausführungsform sind Hubmittel zum Heben des Führungsmittels und/oder Schwenkmittel zum Verschwenken des Führungsmittels am Führungsmittel vorgesehen. Diese Mittel können zum Beispiel im Führungsarm integriert sein, jedoch ist es vorteilhaft, wenn diese Mittel zur leichteren Bewegung des Führungsmittels an der Achse des Führungsmittels zur Bewegung dieser Führungsmittel angeordnet sind. So können diese Hub- und Schwenkmittel einerseits mit der Grundplatte, andererseits mit dem Führungsmittel in Verbindung stehen und so das Führungsmittel relativ zur Grundplatte bewegen, also heben und schwenken. Als Hub- und Schwenkmittel eigenen sich insbesondere Servoantriebe wie Servomotoren mit Absolutwertgeber, die eine präzise, gesteuerte Bewegung erlauben und die z.B. über ein oder mehrere Getriebe mit der Grundplatte und dem Führungsmittel in Verbindung stehen. Solche Servoantriebe werden bevorzugt durch eine Rechnereinheit, z.B. einer zentrale Rechnereinheit, gesteuert und die Eingabemittel der Rechnereinheit erlauben es dem Bediener, den Weg des Führungsmittels und/oder die zeitliche Abfolge der Werkzeugverwendungen vor der Bearbeitung der Bänder festzulegen. Durch die Steuerung der Servoantriebe durch eine oder mehrere Rechnereinheiten ist es dem Bediener möglich, sehr präzise und gleichmäßig den selben Vorgang bei verschiedenen Bändern zu wiederholen und/oder komplizierte Bewegungs- oder Verarbeitungsmuster vorher an einer Rechnereinheit zu erstellen und später diese Bewegung durch die Vorrichtung ausführen zu lassen.

Weitere Vorteile ergeben sich aus den Unteransprüchen und der nachfolgenden Beschreibung eines Ausführungsbeispiels der Erfindung.

### Kurzbeschreibung der Figuren

Die Erfindung wird im Folgenden mittels eines Ausführungsbeispiels anhand der beigefügten Zeichnungen beschrieben. In den Zeichnungen zeigt:
- Figur 1: eine Gesamtvorrichtung zum Schweißen,
- Figur 2: die Vorrichtung von Figur 1 in einer anderen Perspektive,
- Figur 3: die Vorrichtung aus Figur 1, wobei das Führungsmittel sich in einer anderen Position befindet,
- Figur 4: das Führungsmittel in einer vergrößerten Darstellung,
- Figur 5: das Führungsmittel im Schnitt, in einer perspektivischen Darstellung und von unten,

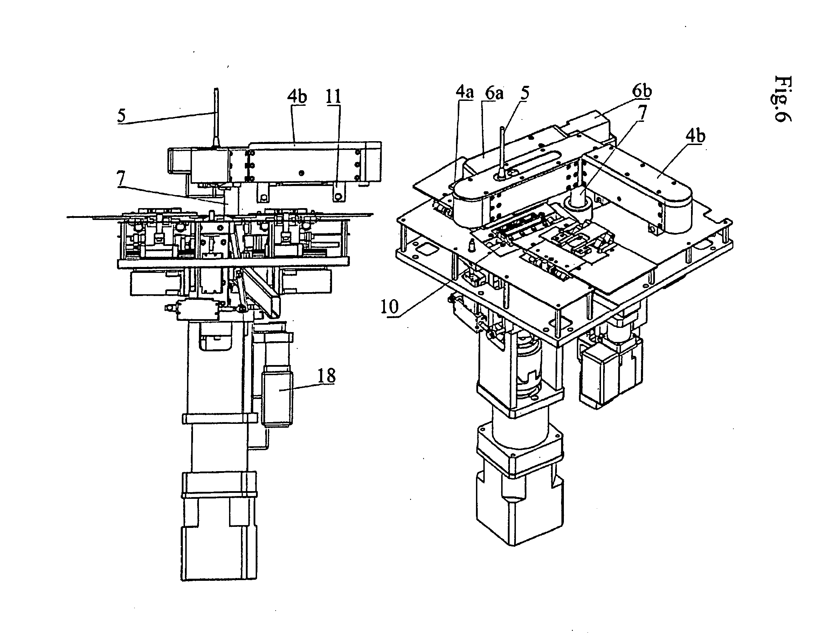

- Figur 6: die Vorrichtung ohne Gehäuse in verschiedenen Perspektiven,
- Figur 7: die Hub- und Schwenkmittel des Führungsarms,
- Figur 8: die Schneidevorrichtung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

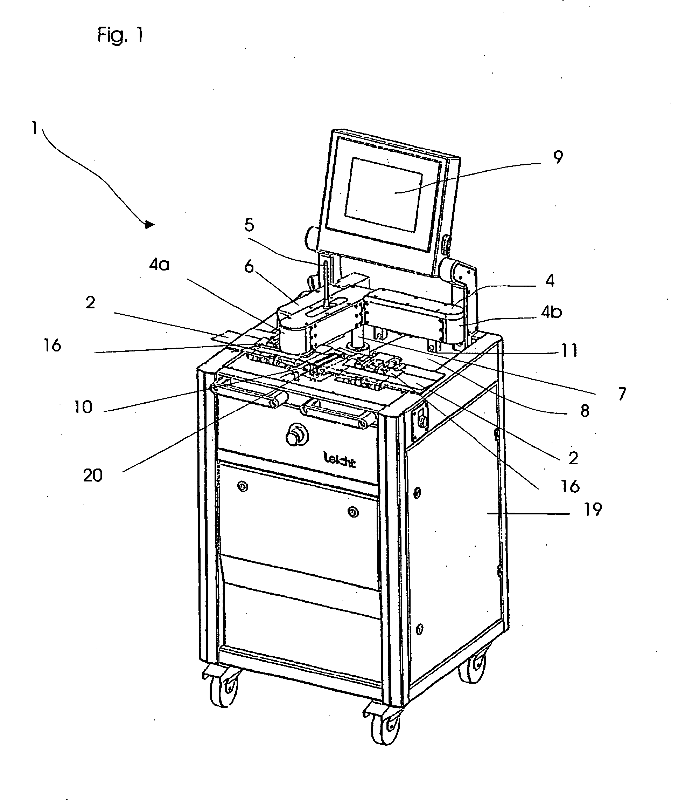

Figur 1 zeigt eine Vorrichtung 1 zum Schweißen von Bändern 2 mit einem Schweißmittel 3 umfassend mindestens eine Schweißelektrode 3a.

Dabei weist die Vorrichtung einen Führungsarm 4 zum Führen verschiedener Werkzeuge auf. Der Führungsarm umfasst zwei Schenkel 4a und 4b und eine vorzugsweise hohle Achse 7. Die Schenkel 4a, 4b und die hohle Achse 7 sind im Schnittbereich 7a miteinander verbunden und stehen jeweils zueinander im rechten Winkel.

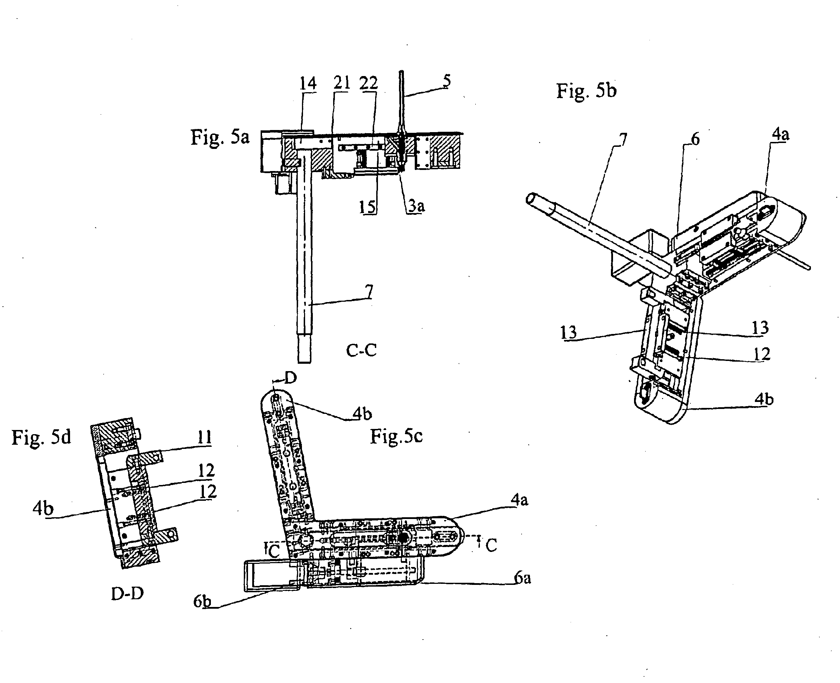

Der Schenkel 4a (Fig. 5) ist zum Führen der Schweißelektrode 3a ausgebildet. Er weist eine Ausbuchtung 15 auf, in der die Elektrode 3a samt ihrer Halterung 3b entlang des Schenkels 4a verfahren werden kann. Dazu ist die Elektrodenhalterung 3b über ein Getriebe 6a mit einem Aktor 6b, insbesondere einem Servoantrieb verbunden. Der Servoantrieb wird über eine Steuerung mittels einer Rechnereinheit (nicht gezeigt) gesteuert.

Eine Absaugvorrichtung zum Absaugen der beim Bearbeitungsvorgang des Bands entstehenden Gase besteht aus der Aussparung 15, die über die Absaugöffnung 17 mit der Bohrung 14 in Verbindung steht, der hohlen Achse 7, einem oder mehreren Filtern (nicht gezeigt) zum Filtern der abgesaugten Gase und einem Gebläse wie z.B. einen Radiallüfter. Dabei sind die einzelnen Teile der Absaugvorrichtung zum Gastransport miteinander verbunden. Der oder die Filter können vor oder hinter dem Gebläse angeordnet sein.

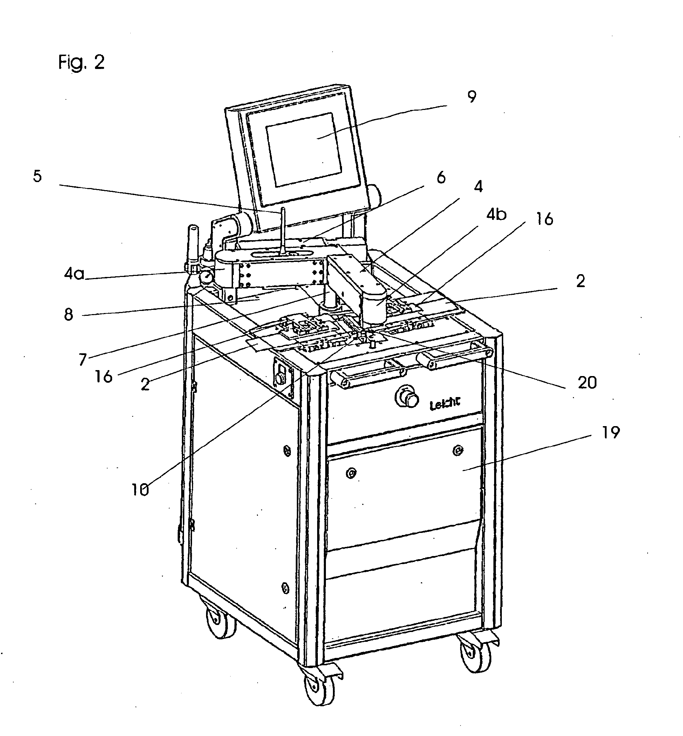

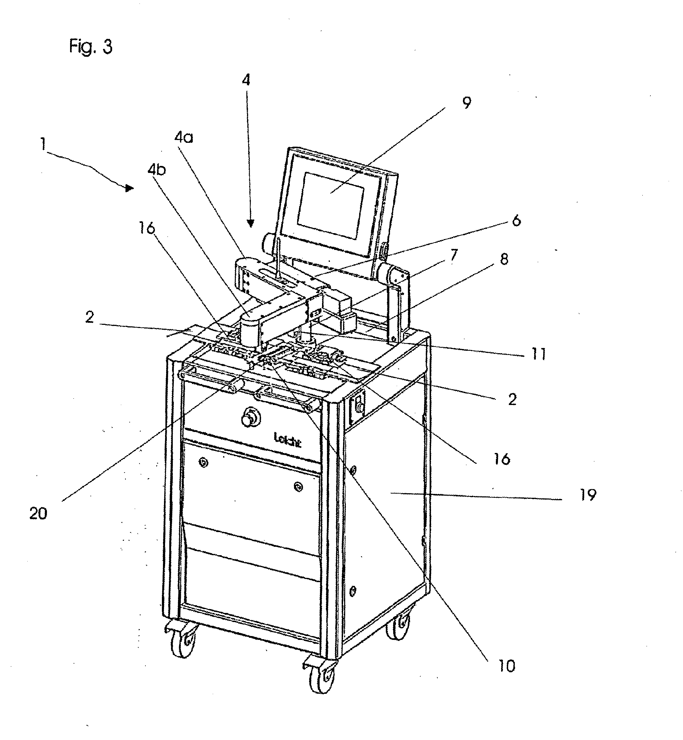

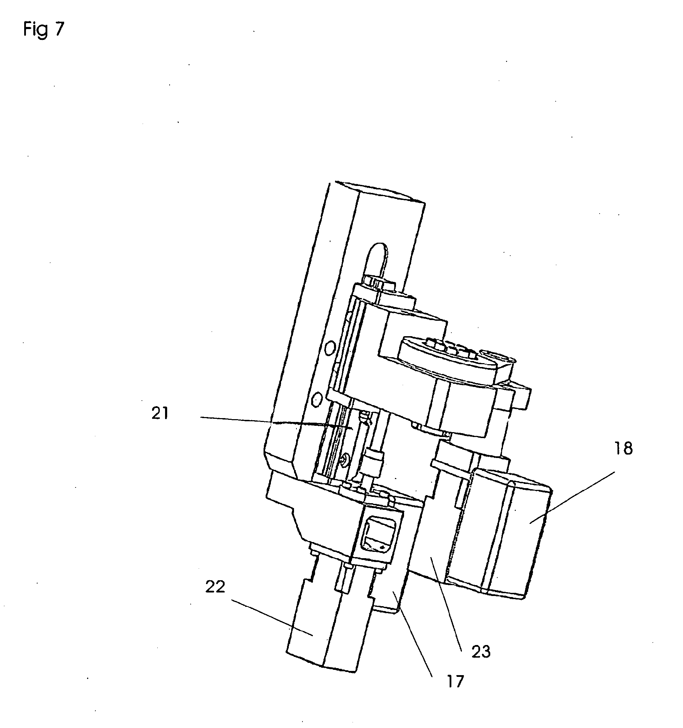

Die Schweißelektrode 3a ist in der Darstellung von Figur 1 durch den Führungsarm 4 verdeckt, der die Schweißelektrode 3a führt. Die Schweißelektrode 3a befindet sich bei dieser Ausführungsform in dem Schenkel 4a des Führungsarms 4 unter dem Stabmittel 5. Das Stabmittel 5 zeigt die Position der Schweißelektrode 3a an. Die Schweißelektrode 3a ist transversal entlang des Führungsarms 4 durch einen Antrieb 6 beweglich. Weiter ist der gesamte Führungsarm um die Achse 7 beweglich (Fig. 1 - 3) insbesondere in der Ebene parallel zur Grundplatte 8 schwenkbar und relativ zur Grundplatte 8 hebbar. Dabei ist es natürlich auch denkbar, dass der Führungsarm Bewegungen in anderen Ebenen ausführt, insbesondere, falls die Grundplatte 8 relativ zur Bandebene geneigt ist, parallel zur Bandebene. Um diese Bewegungen zu bewerkstelligen, sind an der hohlen Achse 7 Hub- und Schwenkmittel angeordnet. Das Hubmittel (Fig. 7) umfasst dabei mindestens einen Aktor 17, dem in dieser Ausführungsform ein Getriebe 22 zugeordnet ist. Der Aktor 17 und das Getriebe 22 sind dabei mit der hohlen Achse 7 in Verbindung, so dass durch die Bewegung des Aktors 17 die hohle Achse 7 entlang einer Führung 21 bewegt und somit der Führungsarm 4 angehoben oder gesenkt wird. Das Schwenkmittel umfasst ebenfalls einen Aktor 18, der mit einem Getriebe 23 mit der hohlen Achse 7 in Verbindung steht. In dieser Ausführungsform steht dabei der Aktor 18 mit dem Aktor 17 so in Verbindung, so dass der Aktor 18 bei Bewegung des Aktors 17 angehoben oder gesenkt wird. Sowohl die Hub- und Schwenkbewegungen des Führungsarms 4 als auch die Transversalbewegungen der Schweißelektrode 3a entlang des Führungsarms 4 sind über einen Bildschirm 9, der an dem Gehäuse 19 der Vorrichtung befestigt ist, kontrollier- und steuerbar.

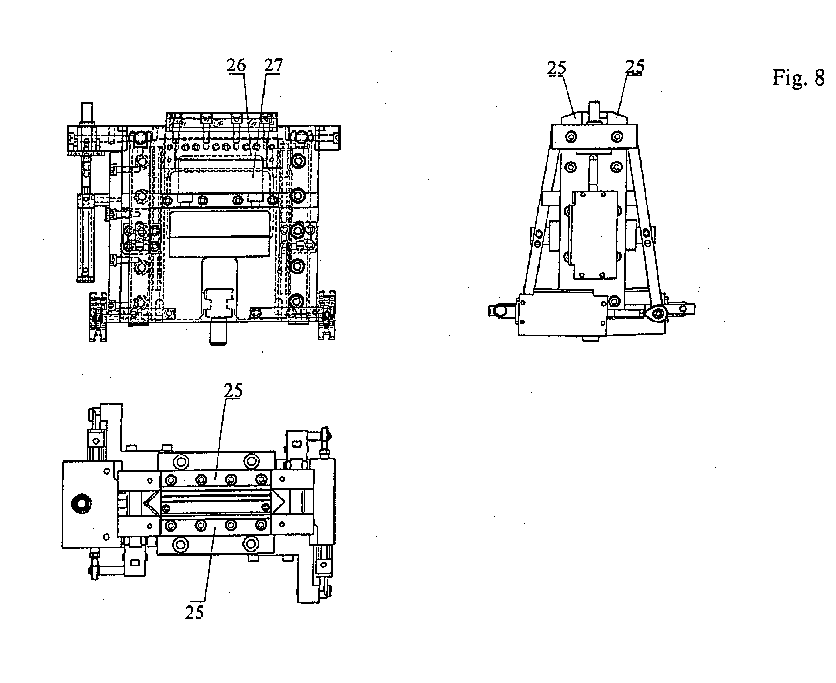

Die Schneidevorrichtung 10 (Fig. 8) befindet sich versenkbar in der Grundplatte 8. Sie umfasst eine Öffnung 27, in die die Bänder 2 eingeführt werden. An der oberen Kante der Öffnung 27 befinden sich Schneidkanten 26, die mit einem weiteren Paar Schneidkanten 25 zusammenwirken.

An dem zweiten Schenkel 4b des Führungsarms 4 (Fig. 5) ist eine Verpressbrücke 11 angeordnet. Die Verpressbrücke 11 ist ein Element eines Verpressmittels. Das Verpressmittel umfasst neben der Verpressbrücke 11 die Schneidevorrichtung 10 als weiteres Element, das mit der Verpressbrücke 11 zusammenwirkt. Diese Verpressbrücke 11 besteht aus zwei Schenkeln 11a und 11 b, die durch eine im rechten Winkel auf den beiden Schenkeln 11 a, 11 b stehende Verbindung 11 c verbunden sind. Die Verpressbrücke ist aus Metall insbesondere Stahl und so ausgeformt, dass die Verbindung 11 c auf die Schweißnaht aufgesetzt werden kann und die Schweißnaht durch Druck glättet. Die Verpressbrücke 11 ist mit mehreren Federelementen 12 an dem Führungsarm 4 angeordnet. Neben der Verpressbrücke 11 sind Niederhalter 13 platziert. Die Niederhalter 13 sind in dieser Ausführungsform statisch an dem Führungsarm 4 angeordnet, könnten aber alternativ auch mit verschiedenen Mitteln beweglich an dem Führungsarm 4 befestigt sein.

### Die Vorrichtung wird wie folgt verwendet:

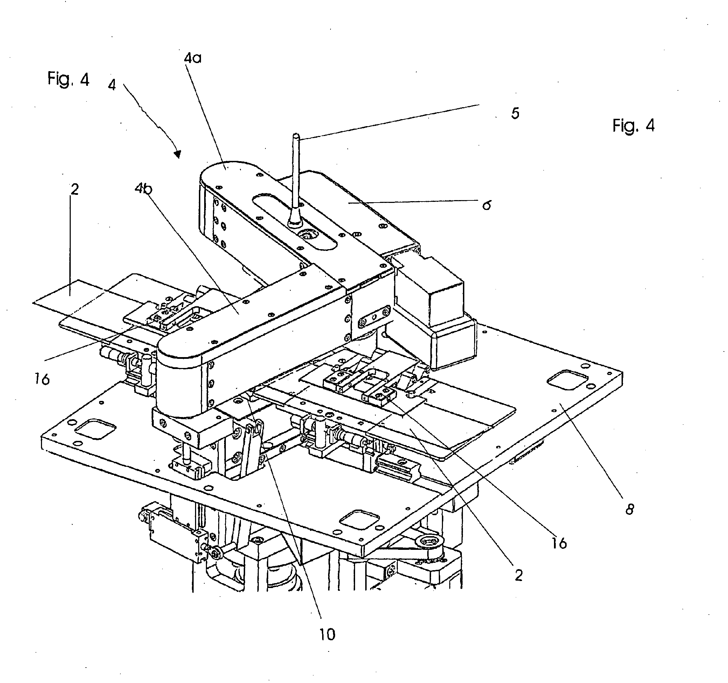

Die Bänder 2 werden in die Bandführungen 16 (Fig. 4) eingelegt und dort fixiert. Mittels Bandführungen werden die Enden der Bänder 2 in die Schneidöffnung 27 der Schneidevorrichtung 10 eingeführt. Dafür befindet sich die Schneidevorrichtung 10 in einer ersten Stellung, bei der sie aus der Grundplatte 8 mit der Schneidöffnung 27 herausragt. Der Führungsarm 4 wird nun mittels der Schwenkvorrichtung, umfassend einen Aktor 18 und das Getriebe 23, so verschwenkt, dass sich der Schenkel 4b über der Schneidevorrichtung 10 befindet. Durch Absenken des Schenkels 4b werden die Niederhalter 13 an der Schneidevorrichtung 10 vorbei auf die Bänder 2 gedrückt. Die Verpressbrücke 11, die sich ebenfalls in dem Schenkel 4b befindet, wird durch die Schneidevorrichtung gegen die Federelemente 12 in Richtung des Führungsarms 4 gedrückt und ragt somit nicht in den Arbeitsbereich. Die Niederhalter 13 fixieren somit die Bänder 2 direkt neben der Schneidevorrichtung 10 und gewähren einen sauberen Schnitt auch bei besonders dünnen Bändern 2. Die Schneidevorrichtung 10 wird nun in Richtung Grundplatte 8 verfahren und dabei werden die Bänder 2 zwischen den Schnittkanten 25 und 26 geschnitten.

Nach dem Schnitt wird der Führungsarm 4 mittels der Hubvorrichtung umfassend den Aktor 17 und das Getriebe 22 gehoben und so das Band 2 durch die Niederhalter 13 freigegeben. Die Schneidevorrichtung 10 wird so weit nach unten verfahren, dass die geschnittenen Bandenden nun auf der Oberseite 20 der Schneidevorrichtung 10 zusammengeführt werden können, indem die beiden Bandführungen 16 weiter zueinander verfahren werden. Der Führungsarm 4 wird nun soweit geschwenkt, bis sich der zweite Schenkel 4a, der die Schweißelektrode 3a trägt, über der Schnittkante befindet. Daraufhin wird die Schweißelektrode 3a bis zu ihrem Startpunkt entlang des Führungsarms 4 bewegt. Der Führungsarm 4 wird gesenkt und die Schweißelektrode 3a kommt auf dem Band 2 oder kurz davor zum Stehen. Durch Anlegen einer geeigneten Spannung zwischen dem Oberteil 20 der Schneidevorrichtung 10, auf dem die Schnittkante nun anliegt, und der Schweißelektrode 3a und durch Bewegen der Schweißelektrode 3a entlang des Bandes 2 entsteht nun eine Schweißnaht. Nachdem die Schweißnaht gefertigt worden ist, kann diese wahlweise auch noch durch die Schweißelektrode 3a geglüht werden, um bessere Verbindungsergebnisse zu erzielen. Da sowohl die Schwenkbewegung als auch die Hubbewegung des Führungsarms 4 und auch die Transversalbewegung der Schweißelektrode 3a durch rechnergesteuerte Motoren (6b, 17,18) vorgenommen wird, ist eine Vielzahl von Bewegungen sowohl beim Schweißen, aber insbesondere beim Glühen möglich.

Sowohl während des Schweißens als auch während des Glühens oder nur in jeweils einem Arbeitsschritt wird aus der Aussparung 15, in der die Schweißelektrode verfahren werden kann, Luft von einer Ansaugöffnung 24 durch die Bohrung 14 in die hohle Achse 7 mittels eines Gebläses abgesaugt. Durch diese Absaugung werden die Gase, die beim Schweißen entstehen oder für das Schweißen zugeführt werden, gefiltert und nach außen geführt oder in dem Gerät gesammelt, um entsorgt oder einer Wiederverwendung zugeführt zu werden. Eine geschlossen Haube zur Abführung der beim Schweißen entstehenden Gase ist nicht erforderlich.

Nach dem Verschweißen kann die Schweißnaht auch verpresst werden. Dies ist gerade bei stark auftragenden Schweißnähten vorteilhaft. In einem solchen Fall wird der Führungsarm 4 erneut angehoben, so dass sich die Schweißelektrode 3a von dem nun geschweißten Band entfernt. Der Führungsarm wird so verschwenkt, dass der Schenkel 4b mit der Verpressbrücke 11 in dem Arbeitsbereich über der Schweißnaht zu stehen kommt. Die Verpressbrücke 11 wird nun mit dem Führungsarm 4 abgesenkt und, da die Schneidevorrichtung 10 sich nun tiefer in der Grundplatte befindet, dieses mal nicht aus dem Arbeitsbereich nach oben gedrückt. Die Verpressbrücke 11 wird in Öffnungen der Grundplatte 8 eingeführt und dort mit Bolzen verriegelt. Daraufhin bewegt sich die Schneidevorrichtung nach oben und drückt mit ihrer abgeflachten Oberseite gegen das Band 2 und somit das Band 2 gegen die Verpressbrücke 11. Da sich die auftragende Schweißnaht zwischen der Verpressbrücke und der Oberseite 20 der Schneidevorrichtung 10 befindet, wird die Schweißnaht verpresst. Nach dem Verpressen wird die Schneidevorrichtung 10 wieder vom Band weg verfahren, die Verpressbrücke 11 entriegelt und der Führungsarm 4 nach oben gehoben und entweder in der Stellung gehalten oder in eine Ruhestellung bewegt. Die Bandführungen 16 können nun das Band 2 freigeben und das geschweißte Band 2 kann entnommen werden.

### Bezugszeichenliste

- 1: Vorrichtung zum Schweißen
- 2: Band
- 3: Schweißmittel
- 3a: Schweißelektrode
- 3b: Halterung der Schweißelektrode
- 4: Führungsarm
- 4a, 4b: Schenkel des Führungsarms
- 5: Stabmittel
- 6: Linearantrieb
- 6a: Getriebe
- 6b: Aktor
- 7: Achse
- 8: Grundplatte
- 9: Bildschirm
- 10: Schneidevorrichtung
- 11: Verpressbrücke
- 11a,11b: Schenkel der Verpressbrücke
- 11 c: Verbindungselement zwischen den Schenkeln
- 12: Federelement
- 13: Niederhalter
- 14: Bohrung
- 15: Aussparung
- 16: Bandführung
- 17: Aktor
- 18: Aktor
- 19: Gehäuse
- 20: Oberseite der Schneidevorrichtung
- 21: Führung
- 22: Getriebe
- 23: Getriebe
- 24: Ansaugöffnung
- 25: Schneidkante
- 26: Schneidkante
- 27: Öffnung

## Patentansprüche

1. Vorrichtung zum Schweißen von Bandmaterial umfassend ein Schweißmittel mit mindestens einer Schweißelektrode (3a) und einen Führungsarm (4) zum Führen der mindestens einen Schweißelektrode (3a) im Führungsarm beim Bewegen entlang des Bandmaterials zur Bildung der Schweißnaht, wobei der Führungsarm (4) im wesentlichen in einer Ebene parallel zum Bandmaterial verschwenkbar ist,
**dadurch gekennzeichnet, dass** mindestens ein weiteres Werkzeug zur Bearbeitung des Bandmaterials durch den mehrschenkligen Führungsarm (4) zuführbar ist und
dass die mindestens eine Schweißelektrode (3a) in einem Schenkel (4a) und mindestens ein weiteres Werkzeug an einem weiteren Schenkel (4b) des Führungsarms (4) geführt sind.

2. Vorrichtung nach Anspruch 1, **dadurch gekennzeichnet, dass** der Führungsarm (4) zweischenklig (4a,4b) ausgebildet ist.

3. Vorrichtung nach Anspruch 1 oder 2, **dadurch gekennzeichnet, dass** die Schenkel (4a,4b) des Führungsarms (4) rechtwinklig zueinander angeordnet sind.

4. Vorrichtung nach einem der vorhergehenden Ansprüche **dadurch gekennzeichnet, dass** das mindestens eine weitere Werkzeug ein Element eines Verpressmittels ist.

5. Vorrichtung nach einem der vorangegangenen Ansprüche, **dadurch gekennzeichnet, dass** das Verpressmittelelement eine Verpressbrücke (11) ist.

6. Vorrichtung nach einem der vorangegangenen Ansprüche, **dadurch gekennzeichnet, dass** das mindestens eine weitere Werkzeug ein Niederhalter (13) ist.

7. Vorrichtung nach dem vorangegangenen Anspruch, **dadurch gekennzeichnet, dass** mindestens zwei Niederhalter (13) an demselben Schenkel (4b) angeordnet sind.

8. Vorrichtung nach einem der vorangegangenen Anspruch, **dadurch gekennzeichnet, dass** Hubmittel zum Heben des Führungsmittels (4) vorgesehen sind.

9. Vorrichtung nach einem der vorangegangenen Ansprüche, **dadurch gekennzeichnet, dass** Schwenkmittel zum Verschwenken des Führungsmittels (4) am Führungsmittel (4) angeordnet sind.

10. Vorrichtung nach einem der vorangegangenen Ansprüche, **dadurch gekennzeichnet, dass** Servoantriebe zur Bewegung des Führungsmittels (4) angeordnet sind.

11. Vorrichtung nach einem der vorangegangenen Ansprüche, **dadurch gekennzeichnet, dass** in der Vorrichtung mindestens eine Rechnereinheit zur Steuerung der Werkzeuge vorgesehen ist.

## Claims

1. Device for welding strip material comprising a welding means with at least one welding electrode (3a) and a guide arm (4) for guiding the at least one welding electrode (3a) in the guide arm when moving along the strip material to form the weld seam, the guide arm (4) being pivotable substantially in a plane parallel to the strip material, **characterised in that** at least one further tool can be fed by the multi-limb guide arm (4) to work the strip material and **in that** the at least one welding electrode (3a) is guided in one limb (4a) and at least one further tool is guided on a further limb (4b) of the guide arm (4).

2. Device according to claim 1, **characterised in that** the guide arm (4) has a two-limb (4a, 4b) configuration.

3. Device according to claim 1 or 2, **characterised in that** the limbs (4a, 4b) of the guide arm (4) are arranged at right angles to one another.

4. Device according to any one of the preceding claims, **characterised in that** the at least one further tool is an element of a pressing means.

5. Device according to any one of the preceding claims, **characterised in that** the pressing means element is a pressing bridge (11).

6. Device according to any one of the preceding claims, **characterised in that** at the least one further tool is a hold-down device (13).

7. Device according to the preceding claim, **characterised in that** at least two hold-down devices (13) are arranged on the same limb (4b).

8. Device according to any one of the preceding claims, **characterised in that** lifting means are provided to lift the guide means (4).

9. Device according to any one of the preceding claims, **characterised in that** pivoting means for pivoting the guide means (4) are arranged on the guide means (4).

10. Device according to any one of the preceding claims, **characterised in that** servo drives are arranged to move the guide means (4).

11. Device according to any one of the preceding claims, **characterised in that** at least one computer unit is provided in the device to control the tools.

## Revendications

1. Dispositif pour le soudage d'un matériau en bande comprenant un moyen de soudage ayant au moins une électrode de soudage (3a) et un bras de guidage (4) pour guider la ou les électrode(s) de soudage (3a) dans le bras de guidage lors du déplacement le long du matériau en bande pour la formation de la soudure, le bras de guidage (4) pouvant essentiellement être pivoté dans un plan parallèle au matériau en bande,
**caractérisé en ce qu'**au moins un outil supplémentaire peut être amené à travers le bras de guidage à plusieurs branches (4) pour le travail du matériau en bande, et
**en ce qu'**au moins une électrode de soudage (3a) est guidée dans une branche (4a) et au moins un outil supplémentaire est guidé dans une autre branche (4b) du bras de guidage (4).

2. Dispositif selon la revendication 1, **caractérisé en ce que** le bras de guidage (4) est constitué de deux branches (4a,4b).

3. Dispositif selon la revendication 1 ou 2, **caractérisé en ce que** les branches (4a,4b) du bras de guidage (4) sont disposées de manière à former un angle droit entre elles.

4. Dispositif selon l'une des revendications précédentes, **caractérisé en ce qu'**au moins un outil supplémentaire est un élément d'un moyen de pressage.

5. Dispositif selon l'une des revendications précédentes, **caractérisé en ce que** l'élément de pressage est un pont de pressage (11).

6. Dispositif selon l'une des revendications précédentes, **caractérisé en ce qu'**au moins un outil supplémentaire est un cadre de support inférieur (13).

7. Dispositif selon l'une des revendications précédentes, **caractérisé en ce qu'**au moins deux cadres de supports inférieurs (13) sont disposés sur la même branche (4b).

8. Dispositif selon l'une des revendications précédentes, **caractérisé en ce que** des moyens de levage sont prévus pour le levage du moyen de guidage (4).

9. Dispositif selon l'une des revendications précédentes, **caractérisé en ce que** des moyens de pivotement sont disposés sur le moyen de guidage (4) pour le pivotement des moyens de guidage (4).

10. Dispositif selon l'une des revendications précédentes, **caractérisé en ce que** des servocommandes sont prévues pour le déplacement du moyen de guidage (4).

11. Dispositif selon l'une quelconque des revendications précédentes, **caractérisé en ce qu'**au moins une unité de calcul est prévue dans le dispositif pour la commande des outils.
